# EUROPEAN PATENT APPLICATION

(11) **EP 3 486 525 A1**
(43) Date of publication of application: **22.05.2019**
(21) Application number: 18000894.8
(22) Date of filing: 13.11.2018
(51) Int. Cl.: F16H 19/04, E06B 9/74, F16H 25/20

(54) **MANUALLY REMOTE CONTROLLED SECONDARY DRIVE SYSTEM FOR ROTARY POWER TRANSMISSION TO A MECHANICAL LOAD CONTROLLED BY MEANS OF MOTOR MEANS**

(30) Priority: 13.11.2017 IT 201700129355
(71) Applicant: Servosystem S.r.l., 10129 Torino (TO) (IT)
(72) Inventor: Seminatore, Fabio, I-10129 Torino (TO) (IT)
(74) Representative: Aprà, Mario

(57) **Abstract**

Manually remote controlled secondary drive system (10A, 10A', 10B, 10B') for rotary power transmission to a mechanical load (U) controlled by means of motor means (M), characterized in that it comprises:
- manually remote controlled kinematic drive means (12A, 12A', 12B, 12B'), Including a shaft (12.1) controlled in rotation by means of the action of an operator and arranged in a remote position with respect to said load, wherein said manually remote controlled kinematic drive means (12A, 12A', 12B, 12B') comprise mechanical brake means closed by spring pressure (12.2), which prevent rotation of said shaft (12.1) during the normal operation of said motor means (M), respectively of said load (U) and, In case of need, are released acting in opposition to the elastic action of said springs by means of the action of an operator;
- negative control coupling means (14A, 14A', 14B, 14B') closed by spring pressure and connected kinematically with respect to said manually remote controlled kinematic drive means (12A, 12A', 12B, 12B') and to said load (U);
- rotary motion transmission means (13.1, 13.2) arranged between said manually remote controlled kinematic drive means (12A, 12A', 12B, 12B') and said coupling means (14A, 14A', 14B, 14B') and configured for the rotary connection thereof;
- rotary motion transmission means (S) arranged between said coupling means (14A, 14A', 14B, 14B') and said load (U) and configured for the rotary connection thereof;
- means (14.1, 14.6, 14.6B) for controlling and maintaining said coupling means (14A, 14A', 14B, 14B') open during the operation of said motor means (M);
- detection means (R) of the operation of said motor means (M), respectively of said load (U), and
- deactivation means (D) of said means (R) for controlling and maintaining said coupling means (14A, 14A', 14B, 14B') open in case of interruption of the operation of said motor means (M), respectively of said load (U).

## Description

The present invention refers to a manually remote controlled secondary drive system for rotary power transmission to a mechanical load controlled by means of motor means.

Said mechanical load is, for example, a rack and pinion mechanism, while the motor means are, for example, electric motor means, it being in any case possible to use, for the purposes of the invention, any other type of motor and of mechanical load, in particular without a brake.

An object of the invention is to provide a manually remote controlled secondary drive system for rotary power transmission to a mechanical load controlled by means of motor means that, in the case of malfunction of the motor means, respectively of said load, can allow the mechanical load to be manually remotely controlled and moved.

Another object of the invention is to provide a manually remote controlled secondary drive system as indicated, which comprises coupling means adapted to dampen the coupling torque.

Yet another object of the invention is to provide a manually remote controlled secondary drive system as specified, which is structurally simple and functionally safe.

In view of these objects, the present invention provides a manually remote controlled secondary drive system for rotary power transmission to a mechanical load controlled by means of motor means, the essential characteristic of which forms the subject matter of the main claim, while further advantageous characteristics of the invention are described in the dependent claims.

The aforesaid claims are intended as fully incorporated herein.

In particular, the present invention provides a manually remote controlled secondary drive system for rotary power transmission to a mechanical load controlled by means of motor means, essentially characterized in that it comprises:
- manually remote controlled kinematic drive means, including a shaft controlled in rotation by means of the action of an operator and arranged in a remote position with respect to said load, wherein said manually remote controlled kinematic drive means comprise mechanical brake means closed by spring pressure, which prevent rotation of said shaft during the normal operation of said motor means, respectively of said load and, in case of need, are released acting in opposition to the elastic action of said springs by means of the action of an operator;
- negative control coupling means closed by spring pressure and connected kinematically with respect to said manually remote controlled kinematic drive means and to said load;
- rotary motion transmission means arranged between said manually remote controlled kinematic drive means and said coupling means and configured for the rotary connection thereof;
- rotary motion transmission means arranged between said coupling means and said load and configured for the rotary connection thereof;
- means for controlling and maintaining said coupling means open during the operation of said motor means;
- detection means of the operation of said motor means, respectively of said load, and
- deactivation means of said means for controlling and maintaining said coupling means open in case of Interruption of the operation of said motor means, respectively of said load.

In this way, in case of interruption of the operation of said motor means, respectively of said load, detected by said detection means, said deactivation means deactivate said means for controlling and maintaining said coupling means open, which are automatically closed and automatically connect said load and said manually remote controlled kinematic drive means in rotation, which act as brake with respect to said load and, by acting in opposition to the elastic action of said springs, can be rotated by means of the operation of an operator.

Other characteristics and advantages of the invention will be apparent from the following detailed description of two examples of embodiment with reference to the drawing, which shows important details for the invention, and from the claims. The characteristics illustrated are not necessarily to scale and are represented so that the specific features according to the invention are clearly highlighted. The different characteristics can be produced individually or in any combination with one another, as variants of the invention.

In the accompanying drawing:
- Fig. 1 is a schematic view, with parts in axial section, of a first example of embodiment of the manually remote controlled secondary drive system for rotary power transmission to a mechanical load controlled by means of motor means and by means of a rigid tubular shaft, according to the present Invention;
- Fig. 2 is a view similar to that of Fig. 1, but in which the coupling means are provided with a damping device of the coupling torque not provided in the system according to Fig. 1;
- Fig. 3 is a schematic view, with parts in axial section, of a second example of embodiment of the manually remote controlled secondary drive system for rotary power transmission to a mechanical load controlled by means of motor means and by means of flexible shaft, according to the present invention;
- Fig. 4 is a view similar to that of Fig. 3, in which the coupling means are provided with a damping device of the coupling torque not provided in the system according to Fig. 3;
- Fig. 5 is a detail view, on an enlarged scale and in axial section, of the coupling means Illustrated In Figs. 2 and 4, provided with the damping device of the coupling torque;
- Fig. 6 is a sectional view orthogonal to the axis of the coupling means illustrated in Fig. 5;
- Fig. 7 is a detail view, on an enlarged scale, of manually remote controlled kinematic drive means of the system according to the invention;
- Fig. 8 is a detail view, on an enlarged scale and in axial section, of the coupling means illustrated in Figs. 1 and 3, i.e., not provided with the damping device of the coupling torque;
- Fig. 9 is a view in axial direction of the coupling means illustrated in Fig. 8.

First example of embodiment of the manually remote controlled secondary drive system for rotary power transmission to a mechanical load controlled by means of motor means.

According to the present first embodiment, there are provided two variants of embodiment of the remote controlled drive system.

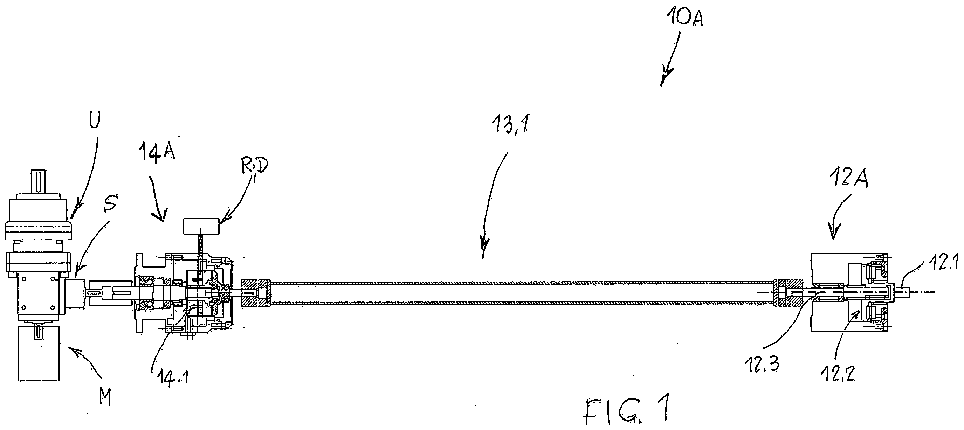

First variant of embodiment (Fig. 1)
the aforesaid system is indicated as a whole with 10A (Fig. 1).

Said system 10A is a manually remote controlled secondary drive system for rotary power transmission to a mechanical load U, without brake, for example a gear motor, or a rack and pinion mechanism, controlled by means of motor means M, for example electric motor means.

The system 10A comprises:
- manually remote controlled kinematic drive means 12A, including a rotating shaft 12.1 controlled in rotation, for example by means of a flywheel or a battery operated power tool (known *per se* and not illustrated) and arranged in remote and easily accessible position with respect to said load;
- negative electromagnetically controlled coupling means 14A, closed by spring pressure, supplied by the electric network that supplies said electric motor means M and connected kinematically with respect to said manually remote controlled kinematic drive means 12A and to said load U, and
- rotary motion transmission means 13.1 arranged between said manually remote controlled kinematic drive means 12A and said coupling means 14A. In particular, said transmission means 13.1 comprise a rigid tubular transmission shaft.

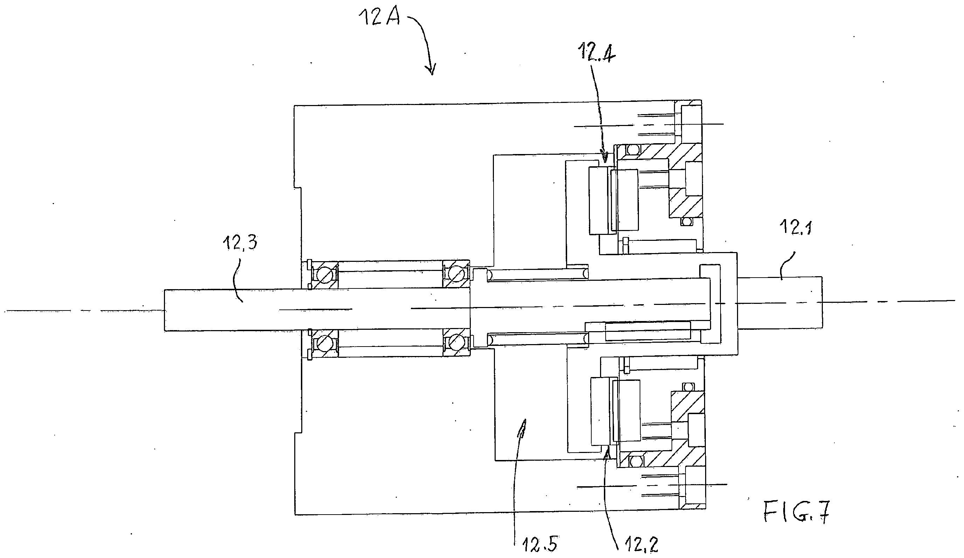

In particular, said kinematic means 12A comprise (Fig. 7) mechanical brake means closed by spring pressure 12.2, which prevent rotation of said shaft 12.1 during the normal operation of said motor means M, respectively of said load U and, in case of need, are released acting in opposition to the elastic action of said springs by means of the action of an operator.

Moreover, the system 10A comprises:
- rotary motion transmission means S arranged between said coupling means 14A and said load U and configured for the rotary connection thereof. For example, said transmission means S comprise bevel gear means;
- means 14.1 for controlling and maintaining said coupling means 14A open during the operation of said motor means M. Said coupling means 14.1 are explained in detail below;
- detection means R of the operation of said motor means M, respectively of said load U. With reference to said motor means M, for example, said detection means can, for example, be speed transducers (tachogenerators, Hall sensors), position transducers (resolvers, encoders), and
- deactivation means D of said means R for controlling and maintaining said coupling means 14A open in case of interruption of the operation of said motor means M, respectively of said load U. By way of example, said deactivation means D comprise relay means, solenoid valves or the like, electrically connected in the electric supply and control circuit of said motor means M.

Through this arrangement, in case of Interruption of the operation of said motor means M, respectively of said load U, detected by said detection means R, said deactivation means D deactivate said means 14.1 for controlling and maintaining said coupling means 14A open, which are automatically closed by elastic action and automatically connect said load U and said manually remote controlled kinematic drive means 12A in rotation, which act as brake with respect to said load U and, by acting in opposition to the elastic action of said springs, can be rotated by means of the operation of an operator, with the use of a flywheel or battery operated power tool.

According to an example of embodiment, said mechanical load can, for example, comprise a rotary power take-off, kinematically connected with respect to a reducer, and said motor means are, for example, of brushless servomotor type. Between said motor means and said load there is interposed, for example, an auxiliary transfer case with bevel gearbox kinematically connected with respect to said coupling means 14A; said transfer case provides said rotary motion transmission means S.

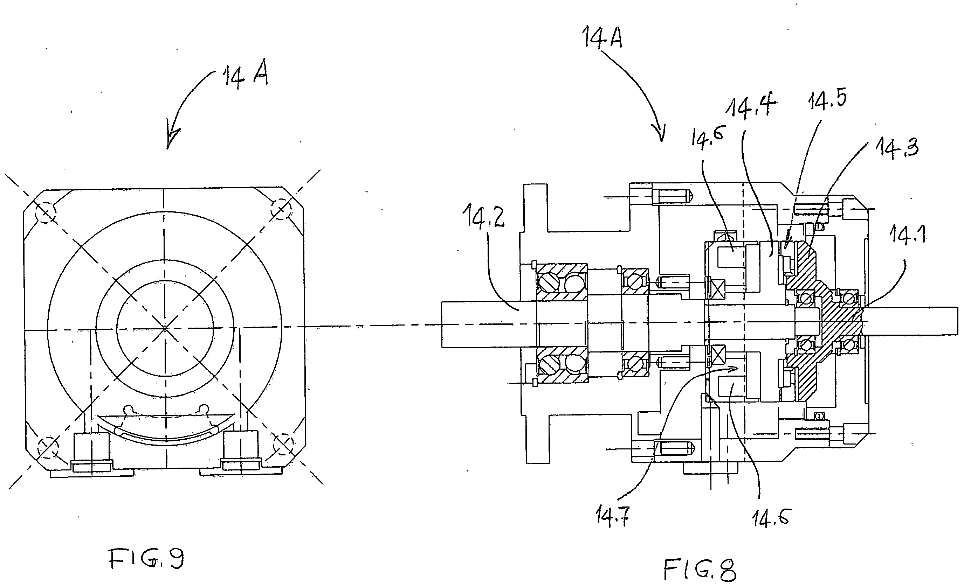

In particular, with reference to Figs. 8 and 9, said negative electromagnetically controlled coupling means 14A, closed by spring pressure, comprise an input shaft 14.1 and an output shaft 14.2, coaxial, at least one pair of discs 14.3, 14.4 with opposed faces and each mounted coaxial on a respective of said shafts, mutual coupling means 14.5 provided on the opposed faces of said discs, electromagnetic means 14.6 that, when supplied electrically, maintain said discs mutually apart, In opposition to the force of elastic means (the arrangement 14.7 of which is indicated with an arrow but which are not illustrated) that, when the power supply to said electromagnetic means is cut off, automatically cause coupling of said discs under elastic pressure.

It will be noted that said mutual coupling means 14.5 are, for example, of friction, toothed and similar type.

In particular, according to the example described, said transfer case S is kinematically connected with respect to the output shaft 14.2 of said coupling means 14A, while said input shaft 14.1 of said coupling means 14A is kinematically connected with respect to said manually remote controlled kinematic drive means 12A, by means of said transmission shaft 13.1.

Said manually remote controlled kinematic drive means 12A can be configured as power take-off.

Said manually remote controlled kinematic drive means 12A further comprise detachable coupling means 12.2 that prevent rotation of said shaft 12.1 during the normal operation of said load and, in case of need, can be released by means of said flywheel or power tool U.

In particular, with reference to Fig. 7, said manually remote controlled kinematic drive means 12A comprise at least one pair of discs with opposed faces and each mounted coaxial on a respective shaft 12.1, 12.3, mutual coupling means 12.4 for example toothed, friction or the like, provided on the opposed faces of said discs, and elastic means (the arrangement 12.5 of which is indicated with an arrow, but which are not illustrated) that normally maintain said opposed discs mutually coupled under elastic load.

In particular, in the present variant of embodiment of the manually controlled secondary drive system for power transmission, said rotary motion transmissions means 13.1 arranged between said manually remote controlled kinematic drive means 12A and said coupling means 14A comprise a rigid tubular transmission shaft, for example linear or, in variant, articulated with universal joints.

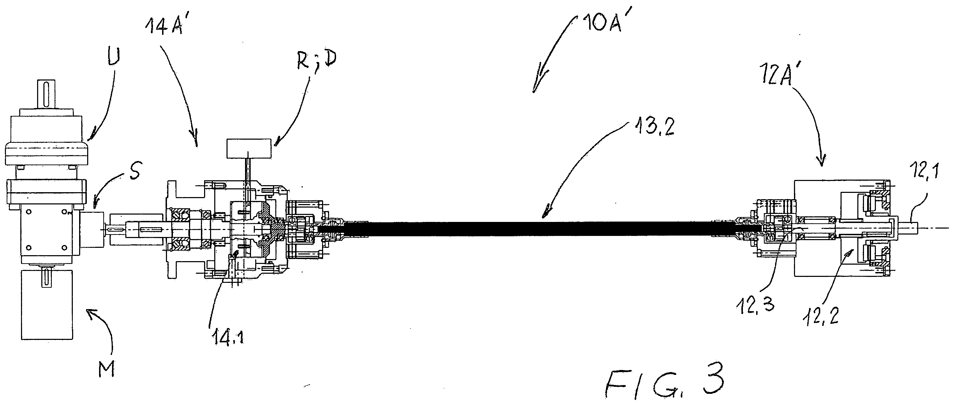

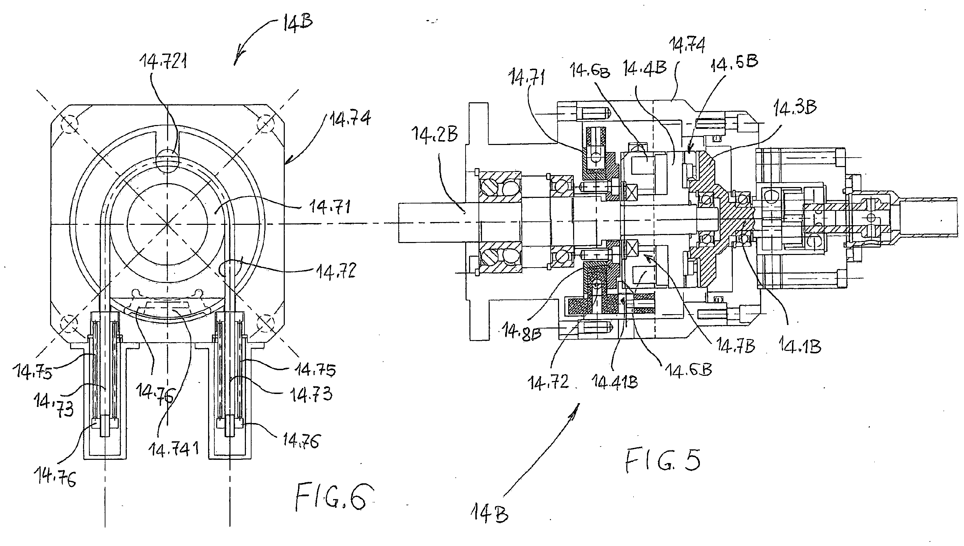

Second variant of embodiment (Fig. 3)
the aforesaid system is indicated as a whole with 10A' (Fig. 6).

The system 10A', which is substantially similar to the system 10A described above, is characterized in that it comprises (the parts similar to those of the system 10A are indicated with the same references):
- manually remote controlled kinematic drive means 12A', including a rotating shaft 12.1 controlled in rotation, for example, by means of a flywheel or battery operated power tool (known *per se* and not illustrated) and arranged in a remote and easily accessible position with respect to said load;
- negative electromagnetically controlled coupling means 14A', closed by spring pressure, supplied by means of the electric network that supplies electric motor means M and connected kinematically with respect to said manually remote controlled kinematic drive means 12A' and to a mechanical load U, and
- rotary motion transmission means 13.2 arranged between said manually remote controlled kinematic drive means 12A' and said coupling means 14A'.

Unlike what was illustrated and described with reference to the system 10A, said rotary motion transmissions means 13.2 arranged between said manually remote controlled kinematic drive means 12A' and said coupling means 14A' comprise a flexible transmission member, such as a flexible transmission shaft.

Correspondingly, the respective axial ends of the shaft of said coupling means 14A' and of the shaft 12.3 of said manually remote controlled kinematic drive means 12A' are provided with connection means in the form of hub or bushing of the respective axial ends of said flexible shaft.

Second example of embodiment of the manually remote controlled secondary drive system for rotary power transmission to a mechanical load controlled bv means of motor means.

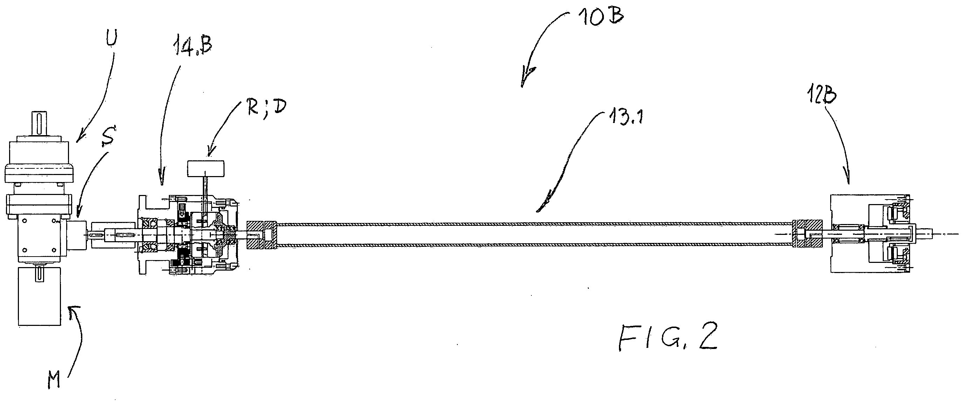

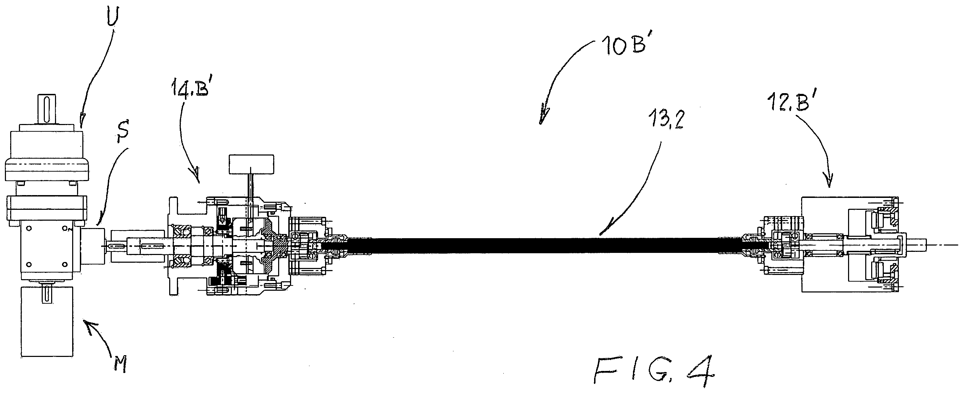

According to the present second embodiment, there are provided two variants of embodiment of the remote controlled secondary drive for rotary power transmission. These are illustrated respectively in Fig. 2 (first variant of embodiment) and in Fig. 4 (second variant of embodiment). In particular, moreover, Figs. 5 and 6 illustrate, in relation to the second embodiment of the invention, in detail, coupling means provided with a damping device of the coupling torque.

The manually remote controlled secondary drive system for rotary power transmission is indicated here with 10B In the first variant of embodiment and with 10B' in the second variant of embodiment, respectively.

It can be noted that said drive system 10B corresponds to the drive system 10A described above with reference to Fig. 1, while said drive system 10B' substantially corresponds to the drive system 10A' described above with reference to Fig. 3. Therefore, for similar parts, the same references used in Fig. 1 are also used In Fig. 2, while the same references used in Fig. 3 are also used in Fig. 4. The only relevant difference between the drive system 10B and the drive system 10A and between the drive system 10B' and the drive system 10A' lies in the fact that said drive systems 10B, 10B' additionally each comprise a respective damping device of the coupling torque, described in detail below with reference to Figs. 5 and 6. Said damping device coacts with coupling means 14B (Fig. 2) and 14B' (Fig. 4), respectively, and is substantially the same in both variants 10B, 10B' of the present second example of embodiment of the invention.

Therefore, said damping device is described in detail only with reference to the drive system 10B.

With reference to the aforesaid Figs. 5 and 6 and in relation to the drive system 10B, the negative electromagnetically controlled coupling means 14B, closed by spring pressure, comprise an input shaft 14.1B and an output shaft 14.2B, coaxial, at least one pair of discs 14.3B, 14.4B with opposed faces and each mounted coaxial on a respective of said shafts, mutual coupling means 14.5B provided on the opposed faces of said discs, electromagnetic means 14.6B that, when supplied with power, maintain said discs mutually apart, in opposition to the force of elastic means (the arrangement 14.7B of which is indicated with an arrow but which are not illustrated) that, when the power supply to said electromagnetic means is cut off, automatically cause coupling of said discs under elastic pressure.

According to the present variant of embodiment, the disc 14.4B integral in rotation with the output shaft 14.2B is connected rotationally, by means of a key 14.41B, with a further disc 14.8B perforated axially and mounted coaxial and integral with respect to said output shaft 14.2B. Said further disc 14.8B has an external cylindrical ring 14.71, projecting axially and around which there is at least partially wound, for example on an angle of around 180°, a flexible member 14.72, such as sturdy metal cable, which is integrally constrained to this disc, for example by means of a cable clamp member 14.721. Said flexible member 14.72 is arranged on a plane orthogonal to the axis of the shaft 14.2B and has two opposite branches 14.73 and with respective free ends extending externally to a respective support body 14.74, forming the casing of said coupling means 14B. Said opposite branches 14.73 extend according to respective tangents substantially parallel to each other with respect to said cylindrical ring 14.71. Each of said opposite branches 14.73 of said flexible member 14.72 is elastically stressed in the direction of extension away from said external cylindrical ring 14.71 by means of respective elastic means 14.75 that are elastically preloaded. For example, around each of said opposite branches 14.73 of said flexible member 14.72 there is arranged a corresponding cylindrical coil spring prestressed and resting, at one end, against said casing 14.74 and, at the other end, against a respective plate 14.76 integral with the free end of the corresponding branch 14.73 of said flexible member 14.72.

On the other side, said further disc 14.8B has a radial recess 14.76, open toward the outside, included between said two opposite branches 14.73 and shaped with mirror symmetry with respect to an axial and median plane between said two tangents. A fixed tooth 14.741 integral with said body or casing 14.74 projects into said recess 14.76.

In this way, both in the condition at rest and in working condition of said coupling means 14B, the two branches of free end 14.73 of said flexible member 14.72 extend symmetrically with respect to said median plane and are maintained under balanced elastic load. Instead, when the two discs 14.3B, 14.4B of said coupling 14B are brought elastically into contact, producing the mutual coupling, any excessive coupling torque of these discs causes a partial rotation of said further disc 14.8B and of the respective shaft 14.2B, within the limits of the angular width of said radial recess 14.76 with respect to said fixed tooth 14.741, in the given direction of rotation. Simultaneously, one of said elastic means 14.75 is elastically compressed absorbing at least in part the kinetic energy applied by the aforesaid coupling torque and subsequently reacts elastically with consequent elastic spring back to rotate said further disc 14.8B in the opposite direction. The other of the aforesaid elastic means 14.75 coacts operating inversely.

This arrangement operates, as can be understood from the foregoing description, as damping device of the coupling torque transmitted by the input shaft 14.1B to the output shaft 14.2B through the coupling means 14B, while said fixed tooth 14.741 coacting with said radial recess 14.76 of said further disc 14.8B acts as limiting device of the angular oscillation of this disc.

With reference to the foregoing description it can be noted that:
- in general, regardless of the type of motor means M of the system according to the invention, said motor means are operatively associated with said detection means R of the operation thereof and said detection means R include transducer means (both speed and position);
- in general, said means for controlling and maintaining said coupling means open can be configured as:
   - pneumatic coupling means: in this case, said deactivation means D of said means for controlling and maintaining said coupling means open comprise a solenoid valve;
   - hydraulic coupling means: in this case, said deactivation means D of said means for controlling and maintaining said coupling means open comprise a solenoid valve;
   - electromagnetic coupling means: in this case, said deactivation means D of said means for controlling and maintaining said coupling means open comprise relay means;
- mechanical coupling means: in this case, said deactivation means D of said means for controlling and maintaining said coupling means open comprise lever means.

## Claims

1. Manually remote controlled secondary drive system (10A, 10A', 10B, 10B') for rotary power transmission to a mechanical load (U) controlled by means of motor means (M), **characterized in that** it comprises:
- manually remote controlled kinematic drive means (12A, 12A', 12B, 12B'), including a shaft (12.1) controlled in rotation by means of the action of an operator and arranged in a remote position with respect to said load, wherein said manually remote controlled kinematic drive means (12A, 12A', 12B, 12B') comprise mechanical brake means closed by spring pressure (12.2), which prevent rotation of said shaft (12.1) during the normal operation of said motor means (M), respectively of said load (U) and, in case of need, are released acting in opposition to the elastic action of said springs by means of the action of an operator;
- negative control coupling means (14A, 14A', 14B, 14B') closed by spring pressure and connected kinematically with respect to said manually remote controlled kinematic drive means (12A, 12A', 12B, 12B') and to said load (U);
- rotary motion transmission means (13.1, 13.2) arranged between said manually remote controlled kinematic drive means (12A, 12A', 12B, 12B') and said coupling means (14A, 14A', 14B, 14B') and configured for the rotary connection thereof;
- rotary motion transmission means (S) arranged between said coupling means (14A, 14A', 14B, 14B') and said load (U) and configured for the rotary connection thereof;
- means (14.1, 14.6, 14.6B) for controlling and maintaining said coupling means (14A, 14A', 14B, 14B') open during the operation of said motor means (M);
- detection means (R) of the operation of said motor means (M), respectively of said load (U), and
- deactivation means (D) of said means (R) for controlling and maintaining said coupling means (14A, 14A', 14B, 14B') open in case of interruption of the operation of said motor means (M), respectively of said load (U);
so that, in case of interruption of the operation of said motor means (M), respectively of said load (U), detected by said detection means (R), said deactivation means (D) deactivate said means (14.1) for controlling and maintaining said coupling means (14A, 14A', 14B, 14B') open, which are automatically closed by elastic action and automatically connect said load (U) and said manually remote controlled kinematic drive means (12A, 12A', 12B, 12B') in rotation, which act as brake with respect to said load (U) and, by acting in opposition to the elastic action of said springs, can be rotated by means of the operation of an operator.

2. Remote controlled secondary drive system (10A, 10A', 10B, 10B') according to claim 1, **characterized in that** it comprises negative electromagnetically controlled coupling means (14A, 14A', 14B, 14B'), closed by spring pressure, supplied by the electric network that supplies electric motor means (M).

3. Remote controlled secondary drive system (10A, 10A', 10B, 10B') according to claim 1, **characterized In that** It comprises motor means (M) associated with said detection means (R) of the operation thereof and said detection means (R) include speed transducer means, respectively position transducer means.

4. Remote controlled secondary drive system (10A, 10A', 10B, 10B') according to claim 1, **characterized in that** said means for controlling and maintaining said coupling means open are configured as pneumatic coupling means and said deactivation means (D) of said means (R) for controlling and maintaining said coupling means open comprise solenoid valve means.

5. Remote controlled secondary drive system (10A, 10A', 10B, 10B') according to claim 1, **characterized in that** said means for controlling and maintaining said coupling means open are configured as hydraulic coupling means and said deactivation means (D) of said means for controlling and maintaining said coupling means open comprise solenoid valve means.

6. Remote controlled secondary drive system (10A, 10A', 10B, 10B') according to claim 1, **characterized in that** said means for controlling and maintaining said coupling means open are configured as electromagnetic coupling means and said deactivation means (D) of said means for controlling and maintaining said coupling means open comprise relay means.

7. Remote controlled secondary drive system (10A, 10A', 10B, 10B') according to claim 1, **characterized in that** said means for controlling and maintaining said coupling means open are configured as mechanical coupling means and said deactivation means (D) of said means for controlling and maintaining said coupling means open comprise lever means.

8. Remote controlled secondary drive system (10B, 10B') according to one or more of the preceding claims, **characterized in that** said coupling means (14B, 14B') comprise a damping device of the coupling torque.

9. Remote controlled secondary drive system (10B, 10B') according to claim 8, **characterized in that** said coupling means (14B, 14B') comprise a disc (14.4B) integral in rotation with the output shaft (14.2B) and connected rotationally with a further disc (14.8B) perforated axially and mounted coaxial and integral with respect to said output shaft (14.2B), **in that** said further disc (14.8B) has a cylindrical ring (14.71), projecting axially and at least partially wound around which is a flexible member (14.72), integrally constrained to this disc, **in that** said flexible member (14.72) is arranged on a plane orthogonal to the axis of the shaft (14.2B) and has two opposite branches (14.73) with respective free ends extending externally to a support body (14.74), and **in that** said opposite branches (14.73) extend according to respective tangents substantially parallel to each other with respect to said cylindrical ring (14.71) and each of said opposite branches (14.73) of said flexible member (14.72) is elastically stressed in the direction of extension away from said external cylindrical ring (14.71) by means of respective elastic means (14.75) that are elastically preloaded.

10. Remote controlled secondary drive system (10B, 10B') according to claim 8 and/or 9, **characterized In that** said further disc (14.8B) has a recess (14.76) and a fixed tooth (14.741) Integral with said body or casing (14.74) and which projects into said recess (14.76).
